# EUROPÄISCHE PATENTSCHRIFT

(11) **EP 1 555 800 B1**
(45) Veröffentlichungstag und Bekanntmachung des Hinweises auf die Patenterteilung: **02.08.2006**
(21) Anmeldenummer: 04090015.1
(22) Anmeldetag: 16.01.2004
(51) Int. Cl.: H04M 15/00

(54) **Verfahren zum Abrechnen einer Datenübertragung mittels Kontenauswahl**
Method of billing a data transmission by means of account selection
Procédé de facturation de transmission de données par sélection de comptes

(43) Veröffentlichungstag der Anmeldung: 20.07.2005
(73) Patentinhaber: SIEMENS AKTIENGESELLSCHAFT, 80333 München (DE)
(72) Erfinder: Gerber, Heiko, 12683 Berlin (DE)

(56) Entgegenhaltungen:
- EP-A- 1 253 771
- WO-A-01/05128
- WO-A-97/42772
- WO-A-98/15108
- WO-A-03/058940
- US-B1- 6 195 419

## Beschreibung

Die Erfindung betrifft ein Verfahren zum Abrechnen einer Datenübertragung in einem Telekommunikationsnetz mittels mindestens zweier durch eine Auswahlnachricht eines Kommunikationsendgerätes ansprechbarer Abrechnungskonten, wobei bei dem Verfahren die an das Kommunikationsendgerät eines Kommunikationsteilnehmers gerichtete oder von dem Kommunikationsendgerät abgehende Datenübertragung gestartet wird.

Ein derartiges Verfahren ist aus dem Patent US 6,195,419 bekannt. Bei diesem Verfahren wird vor Aufbau einer Telefonverbindung von einem Anrufer eine Kontonummer abgefragt, um die Kosten für diese Telefonverbindung über das der Kontonummer zugehörige Konto abzurechnen.

Aus der internationalen Patentanmeldung WO 03/058940 A2 ist ein Verfahren zur Vergebührung eines von einem Nutzer eines Mobilfunkendgerätes über das Mobilfunkendgerät und ein Mobilfunknetz geführten Gespräches bekannt. Dabei wird eine Eingabe des Nutzers zum dienstlichen oder privaten Charakter des Gespräches beispielsweise per Kurznachricht an ein Gebührenzentrum des Mobilfunknetzbetreibers gesendet. Daraufhin wird eine getrennte Verrechnung von Privat- und Dienstgesprächen vorgenommen.

Der Erfindung liegt die Aufgabe zugrunde, ein vielseitig anwendbares Verfahren zum Abrechnen von Datenübertragungen mittels mindestens zweier Abrechnungskonten anzugeben.

Diese Aufgabe wird erfindungsgemäß gelöst durch ein Verfahren zum Abrechnen einer Datenübertragung in einem Telekommunikationsnetz mittels mindestens zweier durch eine Auswahlnachricht eines Kommunikationsendgerätes ansprechbarer Abrechnungskonten, wobei bei dem Verfahren die an das Kommunikationsendgerät eines Kommunikationsteilnehmers gerichtete oder von dem Kommunikationsendgerät abgehende Datenübertragung gestartet wird, nach Beginn der Datenübertragung von einem Netzelement des Telekommunikationsnetzes die Auswahlnachricht des Kommunikationsendgeräts empfangen wird, wobei die Auswahlnachricht eine Kennung des für die Abrechnung der Datenübertragung zu nutzenden Abrechnungskontos enthält, und daraufhin die Datenübertragung über dieses Abrechnungskonto abgerechnet wird, wobei nach Beginn der Datenübertragung von dem Netzelement des Telekommunikationsnetzes eine Auswahlanforderungsnachricht an das Kommunikationsendgerät gesendet wird und die daraufhin von dem Kommunikationsendgerät abgesandte Auswahlnachricht von dem Netzelement des Telekommunikationsnetzes empfangen wird. Dabei ist insbesondere vorteilhaft, dass die Auswahlnachricht nach Beginn der Datenübertragung von dem Netzelement des Telekommunikationsnetzes empfangen wird. Dies umfasst einen Empfang der Auswahlnachricht während der noch andauernden Datenübertragung und auch einen Empfang der Auswahlnachricht nach Beendigung der Datenübertragung. Somit kann von Seiten des Kommunikationsendgerätes während einer bereits laufenden Datenübertragung oder auch nach dem Ende dieser Datenübertragung das für die Abrechnung der Datenübertragung zu verwendende Abrechnungskonto festgelegt werden. Diese Festlegung des zu nutzenden Abrechnungskontos kann also vorteilhafterweise zu einem Zeitpunkt erfolgen, zu dem auf Seiten des Kommunikationsendgerätes die Art der Datenübertragung und/oder mindestens Teile der zu übertragenden Daten bekannt sind.

Von dem Netzelement wird das Kommunikationsendgerät mittels der Auswahl-Anforderungsnachricht zur Rücksendung der Auswahlnachricht angeregt. Dadurch kann von dem Telekommunikationsnetz der Zeitpunkt festgelegt werden, zu dem auf Seiten des Kommunikationsendgerätes die Kennung des Abrechnungskontos mittels der Auswahlnachricht bereitgestellt wird.

Das erfindungsgemäße Verfahren kann so ablaufen, dass bei Nichtempfang der Auswahlnachricht die Datenübertragung über ein vorbestimmtes Abrechnungskonto abgerechnet wird. Damit wird ein Abrechnen der Datenübertragung vorteilhafterweise auch dann ermöglicht, wenn von Seiten des Kommunikationsendgeräts die Auswahlnachricht nicht an das Telekommunikationsnetz gesendet wird.

Das Verfahren kann auch so ablaufen, dass die Auswahlanforderungsnachricht vor Beendigung der Datenübertragung an das Kommunikationsendgerät gesendet wird. Dabei kann vorteilhafterweise während einer laufenden Datenübertragung durch das Telekommunikationsnetz die Kennung des für die Abrechnung der Datenübertragung zu nutzenden Abrechnungskontos angefordert bzw. abgerufen werden.

Das erfindungsgemäße Verfahren kann so ablaufen, dass von einem Vermittlungsknoten des Telekommunikationsnetzes der Beginn der Datenübertragung erkannt wird, von dem Vermittlungsknoten ein Dienstesteuerungspunkt des Telekommunikationsnetzes über den Beginn der Datenübertragung informiert wird, und daraufhin von dem Dienstesteuerungspunkt das Senden der Auswahlanforderungsnachricht an das Kommunikationsendgerät veranlasst wird. Diese Ausgestaltungsform des erfindungsgemäßen Verfahrens ermöglicht es, das erfindungsgemäße Verfahren unter Verwendung von oftmals bereits in Telekommunikationsnetzen vorhandenen Vermittlungsknoten und Dienstesteuerungspunkten durchzuführen. Dadurch wird eine besonders kostengünstige Realisierung des erfindungsgemäßen Verfahrens ermöglicht.

Das Verfahren kann auch so ablaufen, dass die Auswahlanforderungsnachricht nach Beendigung der Datenübertragung an das Kommunikationsendgerät gesendet wird. Dabei wird vorteilhafterweise erst nach Beendigung der Datenübertragung die Kennung des zu nutzenden Abrechnungskontos von dem Kommunikationsendgerät angefordert bzw. abgerufen. Zu diesem Zeitpunkt stehen auf Seiten des Kommunikationsendgerätes vorteilhafterweise Informationen über die gesamte Datenübertragung und die dabei übertragenen Daten zur Verfügung, so dass diese Informationen für die Bestimmung der Kennung herangezogen werden können.

Das Verfahren kann so ablaufen, dass von einem Vermittlungsknoten des Telekommunikationsnetzes das Ende der Datenübertragung erkannt wird, von dem Vermittlungsknoten ein Dienstesteuerungspunkt des Telekommunikationsnetzes über das Ende der Datenübertragung informiert wird, und daraufhin von dem Dienstesteuerungspunkt das Senden der Auswahlanforderungsnachricht an das Kommunikationsendgerät veranlasst wird. Diese Ausführungsform des Verfahrens lässt sich vorteilhafterweise mit in vielen Telekommunikationsnetzen bereits vorhandenen Vermittlungsknoten und Dienstesteuerungspunkten kostengünstig realisieren.

Das erfindungsgemäße Verfahren kann so ablaufen, dass zum Veranlassen des Sendens der Auswahlanforderungsnachricht eine Sende-Aufforderungsnachricht an die Vermittlungsstelle des Telekommunikationsnetzes gesendet wird. Bei dieser Ausführungsform des Verfahrens wird die Auswahlanforderungsnachricht von der Vermittlungsstelle abgesendet.

Das erfindungsgemäße Verfahren kann so ablaufen, dass die Auswahlanforderungsnachricht in Form einer USSD-Nachricht gesendet wird, und daraufhin die Auswahlnachricht in Form einer zweiten USSD-Nachricht empfangen wird.

Das Verfahren kann aber auch so ablaufen, dass zum Veranlassen des Sendens der Auswahlanforderungsnachricht eine Sende-Aufforderungsnachricht an eine Sprachausgabeeinheit des Telekommunikationsnetzes gesendet wird.

Dabei kann die Auswahlanforderungsnachricht in Form einer Sprachnachricht gesendet und daraufhin die Auswahlnachricht empfangen werden.

Das erfindungsgemäße Verfahren kann auch so realisiert werden, dass zum Veranlassen des Sendens der Auswahlanforderungsnachricht eine Sende-Aufforderungsnachricht an ein Kurznachrichten-Servicezentrum des Telekommunikationsnetzes gesendet wird.

Dabei kann die Auswahlanforderungsnachricht in Form einer schriftlichen Kurznachricht gesendet werden, und daraufhin die Auswahlnachricht in Form einer zweiten schriftlichen Kurznachricht empfangen werden.

Das erfindungsgemäße Verfahren wird im Folgenden anhand von in den Figuren 1 bis 3 dargestellten Ausführungsbeispielen näher erläutert: Dabei ist in
Figur 1 ein erstes Ausführungsbeispiel des erfindungsgemäßen Verfahrens mit einer Auswahlnachricht in Form einer USSD-Nachricht, in
Figur 2 ein weiteres Ausführungsbeispiel des erfindungsgemäßen Verfahrens mit einer Auswahlnachricht in Form einer Sprachnachricht und in
Figur 3 ein weiteres Ausführungsbeispiel des erfindungsgemäßen Verfahrens mit einer Auswahlnachricht in Form einer schriftlichen Kurznachricht dargestellt.

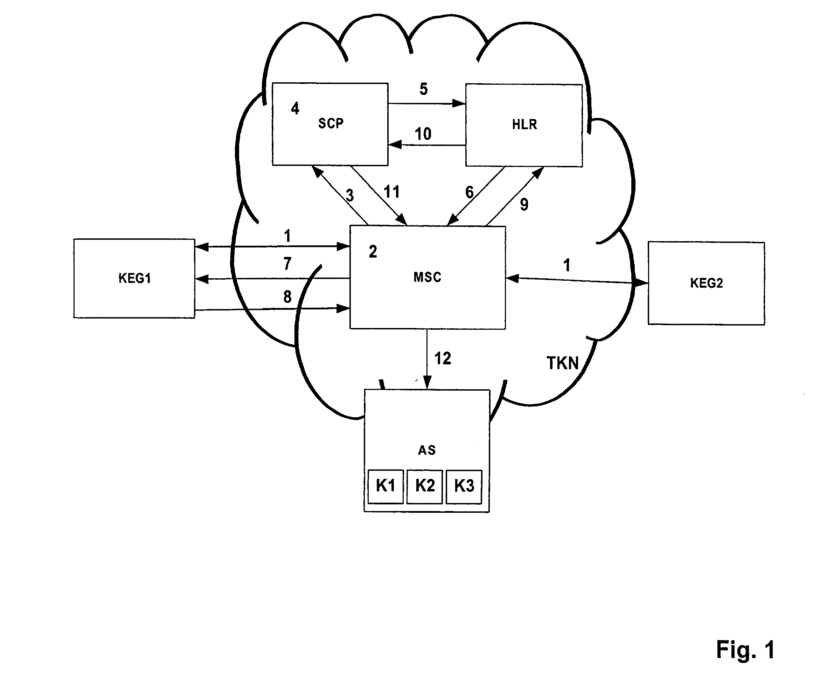

In Figur 1 ist ein Telekommunikationsnetz TKN dargestellt, bei dem es sich im Ausführungsbeispiel um ein Mobilfunknetz (beispielsweise um ein GSM- oder GPRS-Mobilfunknetz) handelt. In anderen Ausführungsbeispielen kann es sich bei dem Telekommunikationsnetz TKN jedoch auch um andere Netze handeln, beispielsweise um Telefonfestnetze, firmeneigene Nachrichtennetze (Intranets) oder um das bekannte Internet.

In diesem Ausführungsbeispiel umfasst das Telekommunikationsnetz TKN ein Netzelement in Form eines Vermittlungsknotens MSC. Dieser Vermittlungsknoten MSC ist oftmals gemeinsam mit einem Besucherregister VLR ausgeführt (MSC/VLR = Mobile Switching Center/Visitor Location Register). Der Vermittlungsknoten MSC (auch Vermittlungsstelle genannt) ist mit einem Heimatregister HLR (HLR = Home Location Register) und mit einem Dienstesteuerungspunkt SCP (SCP = Service Control Point) verbunden. Im Ausführungsbeispiel weist das Telekommunikationsnetz TKN eine Struktur eines Intelligenten Netzes (IN = Intelligent Network) auf; der Vermittlungsknoten MSC übernimmt in diesem Fall auch die Funktion eines Dienstevermittlungspunktes SSP (SSP = Service Switching Point). Weiterhin ist der Vermittlungsknoten MSC mit einem Abrechnungssystem AS verbunden, bei dem es sich beispielsweise um ein in Mobilfunknetzen bekanntes "Postprocessing-Abrechnungssystem" handelt, mit dem die Kosten für Mobilfunkverbindungen mittels Rechnungserstellung abgerechnet werden. Bei dem Abrechnungssystem AS kann es sich aber beispielsweise auch um ein als solches bekanntes "Prepaid-Abrechnungssystem" handeln, in dem den einzelnen Kommunikationsendgeräten bzw. deren Nutzern zugeordnete Guthabenkonten geführt werden. Beispiele für ein derartiges Abrechnungssystem sind die Systeme "Charging@vantage" und "Charge@once" der Siemens AG. Im Ausführungsbeispiel umfasst das Abrechnungssystem AS drei Abrechnungskonten K1, K2 und K3.

Der Vermittlungsknoten MSC ist mit einem ersten Kommunikationsendgerät KEG1 und mit einem zweiten Kommunikationsendgerät KEG2 verbunden; im Ausführungsbeispiel handelt es sich bei diesen beiden Kommunikationsendgeräten um Mobiltelefone.

Zu Beginn des in Figur 1 dargestellten Verfahrensablaufes wird eine von dem ersten Kommunikationsendgerät KEG1 abgehende Datenübertragung 1 über den Vermittlungsknoten 2 zu dem zweiten Kommunikationsendgerät KEG2 aufgebaut und gestartet. Bei dieser Datenübertragung (Nutzdatenübertragung) handelt es sich im Ausführungsbeispiel um einen Telefonanruf. (In einem anderen Ausführungsbeispiel könnte zu Beginn des Verfahrens ebenso von dem zweiten Kommunikationsendgerät KEG2 abgehend eine Datenübertragung in Form eines an das erste Kommunikationsendgerät KEG1 gerichteten Telefonruf gestartet werden.)

Zur Beendigung der Datenübertragung wird von Seiten des zweiten Kommunikationsendgerätes KEG2 der Telefonanruf beendet (indem beispielsweise der Hörer des zweiten Kommunikationsendgerätes aufgelegt wird oder eine entsprechende Taste des zweiten Kommunikationsendgerätes betätigt wird). Diese Beendigung der Datenübertragung wird von dem Vermittlungsknoten MSC in bekannter Weise erkannt (Schritt 2). Von dem Vermittlungsknoten MSC wird daraufhin der Dienstesteuerungspunkt SCP des Telekommunikationsnetzes über das Ende der Datenübertragung informiert, indem die CAP-Nachricht "InitialDetection-Point IDP" von dem Vermittlungsknoten MSC an den Dienstesteuerungspunkt SCP gesendet wird (Schritt 3). Der Dienstesteuerungspunkt SCP überprüft, ob das erste Kommunikationsendgerät KEG1 (welches das Anrufer-Kommunikationsendgerät darstellt) zur Teilnahme an dem Verfahren zum Abrechnen einer Datenübertragung angemeldet ist; derartige Anmeldeinformationen (Subskriptionsinformationen) können beispielsweise aus einem Datenspeicher des Dienstesteuerungspunktes SCP ausgelesen werden. In diesem Ausführungsbeispiel soll angenommen werden, dass das erste Kommunikationsendgerät KEG1 für die Teilnahme an diesem Verfahren angemeldet ist. In dem Datenspeicher des Dienstesteuerungspunkts SCP ist ebenfalls abgespeichert, dass dem Kommunikationsendgerät KEG1 ein vorbestimmtes Abrechnungskonto in Form des Kontos K3 zugeordnet ist. Dieses Konto wird dann zum Abrechnen der Datenübertragung verwendet, wenn keine anderen Informationen über das zum Abrechnen zu nutzende Konto vorliegen. Daraufhin wird von dem Dienstesteuerungspunkt SCP ein Senden einer Auswahlanforderungsnachricht 7 an das Kommunikationsendgerät KEG1 veranlasst. Dies geschieht, indem von dem Dienstesteuerungspunkt SCP die MAP-Nachricht "Unstructured Supplementary Service-Request" an das Heimatregister HLR gesendet wird (Schritt 5). Das Heimatregister HLR sendet daraufhin eine Sende-Aufforderungsnachricht 6 in Form der Nachricht "Unstructured Supplementary Service-Request" an den Vermittlungsknoten MSC und fordert damit diesen Vermittlungsknoten MSC auf, eine USSD-Nachricht (USSD-String) an das erste Kommunikationsendgerät KEG1 zu senden. Daraufhin wird von dem Vermittlungsknoten MSC eine Auswahlanforderungsnachricht in Form der USSD-Nachricht 7 an das erste Kommunikationsendgerät KEG1 gesendet. Diese Auswahl-Anforderungsnachricht, d. h. dieser USSD-String 7, wird von dem ersten Kommunikationsendgerät KEG1 empfangen. Auf den Empfang dieser Auswahl-Anforderungsnachricht hin wird auf einer Anzeigeeinheit des ersten Kommunikationsendgerätes KEG1 folgender Text ausgegeben: "Bitte wählen Sie das Abrechnungskonto zur Abrechnung der beendeten Telefonverbindung!". Nachdem ein Nutzer des ersten Kommunikationsendgerätes KEG1 eine entsprechende Taste des Telefons betätigt hat (beispielsweise die Taste 1 zur Auswahl des ersten Abrechnungskontos K1), wird von dem ersten Kommunikationsendgerät KEG1 eine Auswahlnachricht 8 (die eine Kennung "#01#" des für die Abrechnung der beendeten Telefonverbindung zu nutzenden Abrechnungskontos K1 enthält) an den Vermittlungsknoten MSC übertragen. Die Auswahlnachricht weist die Form eines zweiten USSD-Strings (USSD-Nachricht) auf.

Die Auswahl der Kennung des für die Abrechnung der Datenübertragung zu nutzenden Abrechnungskontos kann auf Seiten des ersten Kommunikationsendgerätes KEG1 auch in einer automatisierten Art und Weise erfolgen. Beispielsweise kann in dem ersten Kommunikationsendgerät KEG1 eine Datentabelle abgespeichert sein, in der verschiedenen Arten von Datenübertragungen jeweils eine Kennung eines Abrechnungskontos zugeordnet ist. Das erste Kommunikationsendgerät KEG1 ermittelt die Art der Datenübertragung (z. B. Telefongespräch (Voice Call) oder Internet-Session), liest aus der Tabelle die zugeordnete Kennung aus und übermittelt diese Kennung mittels der Auswahlnachricht an das Netzelement MSC des Telekommunikationsnetzes.

Die von dem Kommunikationsendgerät KEG1 abgesandte Auswahlnachricht 8 wird von dem ein Netzelement des Telekommunikationsnetzes TKN bildenden Vermittlungsknoten MSC empfangen. Der Vermittlungsknoten MSC des eine Struktur eines Intelligenten Netzes aufweisenden Telekommunikationsnetzes TKN überträgt daraufhin die Information über die Kennung des Abrechnungskontos K1 an das Heimatregister HLR (Schritt 9: Return result operation UnstructuredSS-Request). Das Heimatregister HLR sendet diese Information mittels der MAP-Nachricht "response MAP operation UnstructuredSS-Request" an den Dienstesteuerungspunkt SCP weiter (Schritt 10). Der Dienstesteuerungspunkt SCP übermittelt die Information über die empfangene Kennung mittels der CAP-Nachricht "FurnishChargingInformation" an den Vermittlungsknoten MSC (Schritt 11). Der Vermittlungsknoten MSC erzeugt daraufhin in an sich bekannter Weise eine Abrechnungsinformation ("Ticket") und sendet dieses Ticket an das Postprocessing-Abrechnungssystem AS weiter. Mit diesem Ticket wird auch eine Information über die bei dem Mobiltelefonat angefallenen Kosten an das Abrechnungssystem AS übertragen. Das Abrechnungssystem AS verbucht die bei dem Mobiltelefonat angefallenen Kosten auf dem Konto K1 und berücksichtigt diese Kosten bei der nächsten Rechnungserstellung. Damit ist die Datenübertragung über das Abrechnungskonto K1 abgerechnet.

Wenn bei einem anderen Verfahrensablauf der Vermittlungsknoten MSC die Auswahlnachricht 8 des ersten Telekommunikationsendgerätes KEG1 nicht empfängt (beispielsweise aufgrund einer Störung oder weil auf Seiten des ersten Kommunikationsendgerätes KEG1 keine Auswahl des Abrechnungskontos stattgefunden hat), dann erzeugt das Netzelement MSC ein Ticket, mit dem die Kennung des vorbestimmten Abrechnungskontos K3 zu dem Abrechnungssystem AS übertragen wird. Die Information über die Kennung des vorbestimmten Abrechnungskontos K3 wird in diesem Fall mittels der Nachricht "FurnishChargingInformation" (Schritt 11) an den Vermittlungsknoten übertragen. Auch in diesem Fall kann also eine Abrechnung der Datenübertragung stattfinden.

In einem anderen Ausführungsbeispiel können die vorstehend beschriebenen Verfahrensschritte natürlich auch vor dem Ende der Datenübertragung stattfinden, beispielsweise während einer laufenden Nutzdatenübertragung bzw. Nutzdatenverbindung in Form eines laufenden Mobiltelefonanrufs. In diesem Falle wird von dem Vermittlungsknoten MSC z. B. der Beginn der Datenübertragung erkannt (und daraufhin wird der Vermittlungsknoten MSC den Dienstesteuerungspunkt SCP mittels einer Nachricht, die ähnlich der oben beschriebenen Nachricht 3 ausgestaltet ist, über den Beginn der Datenübertragung informieren). Daraufhin laufen die weiteren Verfahrensschritte wie oben beschriebene ab. In diesem Fall schreibt der Vermittlungsknoten MSC in das Ticket beispielsweise Informationen über einen Kosten-Pauschalbetrag (z. B. 1 Euro Pauschalkosten pro Telefonat) ein; mit diesem Kosten-Pauschalbetrag wird daraufhin das durch die Kennung bestimmte Abrechnungskonto belastet. Im Rahmen dieser Erfindung bezeichnet die Angabe "nach Beginn der Datenübertragung" sowohl einen Zeitpunkt nach Beginn und vor Ende der Datenübertragung als auch einen Zeitpunkt nach Beginn und nach Ende der Datenübertragung.

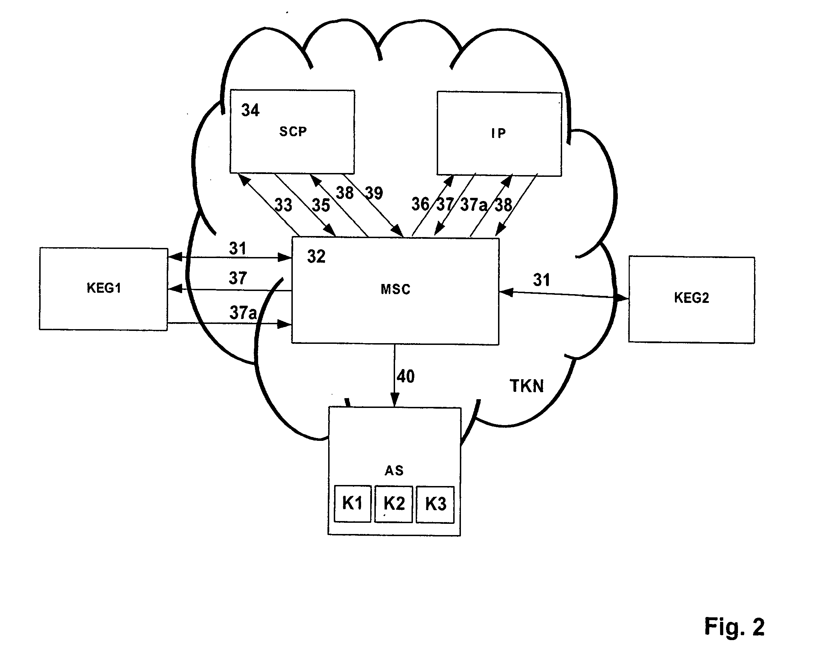

In Figur 2 ist ein weiterer Verfahrensablauf des erfindungsgemäßen Verfahrens dargestellt, bei dem die Schritte 31 und 32 mit den im Zusammenhang mit der Figur 1 beschriebenen Schritten 1 und 2 übereinstimmen. Der Vermittlungsknoten MSC sendet daraufhin eine weitere CAP-Nachricht 33 "InitialDetectionPoint" an den Dienstesteuerungspunkt SCP und informiert damit den Dienstesteuerungspunkt über das Ende der Datenübertragung. Daraufhin stellt der Dienstesteuerungspunkt SCP analog zum Schritt 4 der Figur 1 fest, dass das erste Kommunikationsendgerät KEG1 an dem Verfahren zum Abrechnen teilnimmt und ordnet dem ersten Kommunikationsendgerät KEG1 das vorbestimmte Abrechnungskonto K3 zu (Schritt 34). Daraufhin wird von dem Dienstesteuerungspunkt SCP das Senden einer Auswahlanforderungsnachricht 37 an das Kommunikationsendgerät KEG1 veranlasst, indem von dem Dienstesteuerungspunkt SCP die CAP-Nachrichten "ConnectToRessource" und "PromptAndCollectUserInformation" an den Vermittlungsknoten MSC gesendet werden (Schritt 35). Daraufhin sendet der Vermittlungsknoten MSC die CAP-Nachricht "PromptAndCollectUserInformation" an eine Sprachausgabeeinheit IP (IP = Intelligent Peripheral) des Telekommunikationsnetzes (Schritt 36); diese CAP-Nachricht 36 stellt eine Sende-Aufforderungsnachricht dar. Die Sprachausgabeeinheit IP sendet daraufhin eine Auswahl-Anforderungsnachricht in Form einer Sprachnachricht 37 an den Vermittlungsknoten MSC, der Vermittlungsknoten MSC sendet die Auswahl-Anforderungsnachricht 37 an das erste Kommunikationsendgerät KEG1 weiter. Die Sprachnachricht 37 lautet: "Bitte wählen Sie das Konto für die gerade beendete Telefonverbindung." Nachdem auf Seiten des ersten Kommunikationsendgerätes KEG1 das zur Abrechnung zu nutzende Abrechnungskonto K1 ausgewählt wurde, wird die Kennung dieses Kontos mittels einer Auswahlnachricht 37a über den Vermittlungsknoten MSC zu der Sprachausgabeeinheit IP übertragen. Die Auswahlnachricht wird in diesem Fall durch eine von einem Nutzer des Kommunikationsendgerätes KEG1 stammende Sprachnachricht gebildet. Die Sprachausgabeeinheit IP überträgt diese Kennung mittels der CAP-Nachricht "return result of CAP operation PromptAndCollectUserInformation" an den Vermittlungsknoten MSC (Schritt 38). Der Vermittlungsknoten MSC leitet diese CAP-Nachricht an den Dienstesteuerungspunkt SCP weiter. Der Dienstesteuerungspunkt SCP beendet die Verbindung zwischen dem Vermittlungsknoten MSC und der Sprachausgabeeinheit IP mittels der CAP-Nachricht "DisconnectForwardConnection" und sendet die Kennung mittels der CAP-Nachricht "FurnishChargingInformation" an den Vermittlungsknoten MSC weiter (Schritt 39). Der Vermittlungsknoten MSC übermittelt die Kennung zusammen mit anderen für die Abrechnung der Datenübertragung relevanten Informationen (wie im Zusammenhang mit der Figur 1 beschrieben) an das Abrechnungssystem AS (Schritt 40).

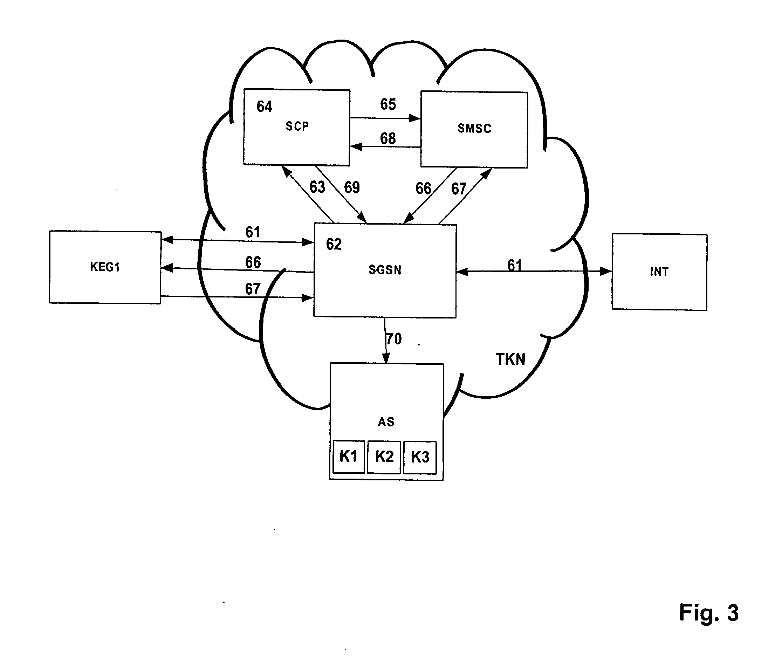

In Figur 3 ist ein weiteres Verfahren zum Abrechnen einer Datenübertragung dargestellt, wobei die Datenübertragung zwischen dem ersten Kommunikationsendgerät KEG1 in Form eines Mobiltelefons und einem nicht explizit dargestellten Server des Internets INT durchgeführt wird. In diesem Ausführungsbeispiel bildet ein Vermittlungsknoten SGSN (SGSN = Serving GPRS Support Node) ein Netzelement des Telekommunikationsnetzes TKN. Über diesen Vermittlungsknoten SGSN wird eine GPRS-Datenübertragung 61 (GPRS-Session) zwischen dem ersten Kommunikationsendgerät KEG1 und dem Server des Internets INT gestartet. Nach Beendigung dieser Datenübertragung (z. B. Trennen der GPRS-Session durch das erste Kommunikationsendgerät KEG1) wird die Beendigung der Datenübertragung durch den Vermittlungsknoten SGSN ermittelt (Schritt 62). Daraufhin informiert der Vermittlungsknoten SGSN mittels der CAP-Nachricht "InitialDPGPRS" den Dienstesteuerungspunkt SCP über das Ende der Datenübertragung (Schritt 63). Im Schritt 64 ermittelt der Dienstesteuerungspunkt SCP in bekannter Weise, ob das erste Kommunikationsendgerät KEG1 an dem Verfahren teilnimmt und welches das vorbestimmte Abrechnungskonto (Standard-Abrechnungskonto) des Kommunikationsendgerätes KEG1 ist (Konto K3). Daraufhin wird von dem Dienstesteuerungspunkt SCP das Senden einer Auswahl-Anforderungsnachricht 66 an das Kommunikationsendgerät KEG1 veranlasst, indem eine Sende-Aufforderungsnachricht 65 an ein Kurznachrichten-Servicezentrum SMSC (SMSC = Short Massage Service Center) des Telekommunikationsnetzes TKN gesendet wird. Das Kurznachrichten-Servicezentrum SMSC sendet daraufhin eine Auswahl-Anforderungsnachricht in Form einer schriftlichen Kurznachricht 66 (SMS) über den Vermittlungsknoten SGSN an das erste Kommunikationsendgerät KEG1.

Daraufhin sendet das erste Kommunikationsendgerät KEG1 eine die Kennung des bei der Abrechnung zu nutzenden Abrechnungskontos enthaltende Auswahlnachricht in Form einer zweiten schriftlichen Kurznachricht 67 an das Telekommunikationsnetz TKN, diese Auswahlnachricht 67 wird von dem Netzelement SGSN empfangen und an das Kurznachrichten-Servicezentrum SMSC weitergeleitet. Die Auswahlnachricht kann z. B. aus einer SMS-Nachricht bestehen, die lediglich ein Zeichen "1" enthält. Dieses Zeichen stellt die Kennung des Kontos K1 dar. Das Kurznachrichten-Servicezentrum liest die Kennung aus der Auswahlnachricht 67 aus und übermittelt diese Kennung an den Dienstesteuerungspunkt SCP (Schritt 68). Daraufhin sendet der Dienstesteuerungspunkt SCP eine Information über die empfangene Kennung mittels der CAP-Nachricht "FurnishChargingInformationGPRS" an den Vermittlungsknoten SGSN (Schritt 69). Daraufhin überträgt der Vermittlungsknoten SGSN analog zu dem Vermittlungsknoten MSC in den Figuren 1 und 2 die empfangene Kennung in einer Ticket-Nachricht 70 gemeinsam mit Informationen über die bei der Datenübertragung angefallenen Kosten an das Abrechnungssystem AS.

Bei den beschriebenen Verfahren ist besonders vorteilhaft, dass die Auswahl des für die Abrechnung der Datenübertragung zu nutzenden Abrechnungskontos während der Datenübertragung oder auch nach der Datenübertragung erfolgen kann. Insbesondere können einem Kommunikationsendgerät in Form eines Mobil- oder Festnetztelefons eine Auswahl aus einer Mehrzahl von Abrechnungskonten für die Abrechnung der Datenübertragung ermöglicht werden. Das Verfahren kann als ein IN-Dienst eines Intelligenten Netzes realisiert werden, der für das erste Kommunikationsendgerät KEG1 gebucht (subskribiert) werden kann.

## Patentansprüche

1. Verfahren zum Abrechnen einer Datenübertragung (1,31,61) in einem Telekommunikationsnetz (TKN) mittels mindestens zweier durch eine Auswahlnachricht eines Kommunikationsendgerätes (KEG1) ansprechbarer Abrechnungskonten (K1,K2,K3), wobei bei dem Verfahren
- die an das Kommunikationsendgerät (KEG1) eines Kommunikationsteilnehmers gerichtete oder von dem Kommunikationsendgerät (KEG1) abgehende Datenübertragung (1,31,61) gestartet wird,
- nach Beginn der Datenübertragung von einem Netzelement (MSC,SGSN) des Telekommunikationsnetzes die Auswahlnachricht (8,37a,67) des Kommunikationsendgeräts (KEG1) empfangen wird, wobei die Auswahlnachricht eine Kennung des für die Abrechnung der Datenübertragung zu nutzenden Abrechnungskontos (K1) enthält, und
- daraufhin die Datenübertragung über dieses Abrechnungskonto (K1) abgerechnet wird,
**dadurch gekennzeichnet, dass**
- nach Beginn der Datenübertragung von dem Netzelement (MSC,SGSN) des Telekommunikationsnetzes (TKN) eine Auswahlanforderungsnachricht (7,37,66) an das Kommunikationsendgerät (KEG1) gesendet wird, und
- die daraufhin von dem Kommunikationsendgerät (KEG1) abgesandte Auswahlnachricht (8,37a,67) von dem Netzelement des Telekommunikationsnetzes empfangen wird.

2. Verfahren nach Anspruch 1,
**dadurch gekennzeichnet , dass**
- bei Nichtempfang der Auswahlnachricht (8,37a,67) die Datenübertragung über ein vorbestimmtes Abrechnungskonto (K3) abgerechnet wird.

3. Verfahren nach Anspruch 1 oder 2,
**dadurch gekennzeichnet , dass**
- die Auswahlanforderungsnachricht (7,37,66) vor Beendigung der Datenübertragung an das Kommunikationsendgerät (KEG1) gesendet wird.

4. Verfahren nach einem der Ansprüche 1 bis 3,
**dadurch gekennzeichnet, dass**
- von einem Vermittlungsknoten (MSC,SGSN) des Telekommunikationsnetzes der Beginn der Datenübertragung (1,31,61) erkannt wird,
- von dem Vermittlungsknoten ein Dienstesteuerungspunkt (SCP) des Telekommunikationsnetzes über den Beginn der Datenübertragung informiert (3,33,63) wird, und
- daraufhin von dem Dienstesteuerungspunkt (SCP) das Senden der Auswahlanforderungsnachricht (7,37,66) an das Kommunikationsendgerät (KEG1) veranlasst (5,35,65) wird.

5. Verfahren nach Anspruch 1 oder 2,
**dadurch gekennzeichnet, dass**
- die Auswahlanforderungsnachricht (7,37,66) nach Beendigung der Datenübertragung an das Kommunikationsgerät (KEG1) gesendet wird.

6. Verfahren nach einem der Ansprüche 1 bis 3 oder 5,
**dadurch gekennzeichnet, dass**
- von einem Vermittlungsknoten (MSC,SGSN) des Telekommunikationsnetzes das Ende der Datenübertragung (1,31,61) erkannt wird,
- von dem Vermittlungsknoten ein Dienstesteuerungspunkt (SCP) des Telekommunikationsnetzes über das Ende der Datenübertragung informiert (3,33,63) wird, und
- daraufhin von dem Dienstesteuerungspunkt (SCP) das Senden der Auswahlanforderungsnachricht (7,37,66) an das Kommunikationsendgerät (KEG1) veranlasst (5,35,65) wird.

7. Verfahren nach einem der Ansprüche 4 bis 6,
**dadurch gekennzeichnet, dass**
- zum Veranlassen des Sendens der Auswahlanforderungsnachricht (7) eine Sende-Aufforderungsnachricht (6) an die Vermittlungsstelle (MSC) des Telekommunikationsnetzes (TKN) gesendet wird.

8. Verfahren nach einem der Ansprüche 1 bis 7,
**dadurch gekennzeichnet, dass**
- die Auswahlanforderungsnachricht in Form einer USSD-Nachricht (7) gesendet wird, und
- daraufhin die Auswahlnachricht in Form einer zweiten USSD-Nachricht (8) empfangen wird.

9. Verfahren nach einem der Ansprüche 4 bis 6,
**dadurch gekennzeichnet , dass**
- zum Veranlassen des Sendens der Auswahlanforderungsnachricht (37) eine Sende-Aufforderungsnachricht (36) an eine Sprachausgabeeinheit (IP) des Telekommunikationsnetzes (TKN) gesendet wird.

10. Verfahren nach einem der Ansprüche 1 bis 6 oder 9,
**dadurch gekennzeichnet, dass**
- die Auswahlanforderungsnachricht in Form einer Sprachnachricht (37) gesendet wird, und
- daraufhin die Auswahlnachricht (37a) empfangen wird.

11. Verfahren nach einem der Ansprüche 4 bis 6,
**dadurch gekennzeichnet , dass**
- zum Veranlassen des Sendens der Auswahlanforderungsnachricht (66) eine Sende-Aufforderungsnachricht (65) an ein Kurznachrichten-Servicezentrum (SMSC) des Telekommunikationsnetzes (TKN) gesendet wird.

12. Verfahren nach einem der Ansprüche 1 bis 6 oder 11,
**dadurch gekennzeichnet, dass**
- die Auswahlanforderungsnachricht in Form einer schriftlichen Kurznachricht (66) gesendet wird, und
- daraufhin die Auswahlnachricht in Form einer zweiten schriftlichen Kurznachricht (67) empfangen wird.

## Claims

1. Method for billing for a data transmission (1, 31, 61) in a telecommunication network (TKN) using at least two billing accounts (K1, K2, K3) which can be addressed by a selection message from a communication terminal (KEG1), where the method involves
- the data transmission (1, 31, 61) sent to the communication terminal (KEG1) of a communication subscriber or sent from the communication terminal (KEG1) being started,
- a network element (MSC, SGSN) in the telecommunication network receiving the selection message (8, 37a, 67) from the communication terminal (KEG1) after the start of the data transmission, with the selection message containing an identifier for the billing account (K1) which is to be used for billing for the data transmission, and
- this billing account (K1) then being used to bill for the data transmission,
**characterized in that**
- the network element (MSC, SGSN) in the telecommunication network (TKN) sends a selection request message (7, 37, 66) to the communication terminal (KEG1) after the start of the data transmission, and
- the selection message (8, 37a, 67) which is then sent by the communication terminal (KEG) is received by the network element in the telecommunication network.

2. Method according to Claim 1,
**characterized in that**
- if the selection message (8, 37a, 67) is not received then a predetermined billing account (K3) is used to bill for the data transmission.

3. Method according to Claim 1 or 2,
**characterized in that**
- the selection request message (7, 37, 66) is sent to the communication terminal (KEG1) before the data transmission is terminated.

4. Method according to one of Claims 1 to 3,
**characterized in that**
- a switching node (MSC, SGSN) in the telecommunication network recognizes the start of the data transmission (1, 31, 61),
- the switching node informs a service control point (SCP) in the telecommunication network about the start of the data transmission (3, 33, 63), and
- the service control point (SCP) then prompts the sending of the selection request message (7, 37, 66) to the communication terminal (KEG1) (5, 35, 65).

5. Method according to Claim 1 or 2,
**characterized in that**
- the selection request message (7, 37, 66) is sent to the communication terminal (KEG1) after the data transmission is terminated.

6. Method according to one of Claims 1 to 3 or 5,
**characterized in that**
- a switching node (MSC, SGSN) in the telecommunication network recognizes the end of the data transmission (1, 31, 61),
- the switching node informs a service control point (SCP) in the telecommunication network about the end of the data transmission (3, 33, 63), and
- the service control point (SCP) then prompts the sending of the selection request message (7, 37, 66) to the communication terminal (KEG1) (5, 35, 65).

7. Method according to one of Claims 4 to 6,
**characterized in that**
- the sending of the selection request message (7) is prompted by sending a send request message (6) to the switching centre (MSC) in the telecommunication network (TKN) .

8. Method according to one of Claims 1 to 7,
**characterized in that**
- the selection request message is sent in the form of a USSD message (7), and
- the selection message is then received in the form of a second USSD message (8).

9. Method according to one of Claims 4 to 6,
**characterized in that**
- the sending of the selection request message (37) is prompted by sending a send request message (36) to a voice output unit (IP) in the telecommunication network (TKN).

10. Method according to one of Claims 1 to 6 or 9,
**characterized in that**
- the selection request message is sent in the form of a voice message (37), and
- the selection message (37a) is then received.

11. Method according to one of Claims 4 to 6,
**characterized in that**
- the sending of the selection request message (66) is prompted by sending a send request message (65) to a short message service centre (SMSC) in the telecommunication network (TKN).

12. Method according to one of Claims 1 to 6 or 11,
**characterized in that**
- the selection request message is sent in the form of a written short message (66), and
- the selection message is then received in the form of a second written short message (67).

## Revendications

1. Procédé de facturation d'une transmission de données (1, 31, 61) dans un réseau de télécommunications (TKN) au moyen d'au moins deux comptes de facturation (K1, K2, K3) adressables par un message de sélection d'un terminal de communication (KEG1), procédé dans lequel
- on démarre la transmission de données (1, 31, 61) arrivant au terminal de communication (KEGL) d'un abonné de communication ou partant du terminal de communication (KEG1),
- après le début de la transmission de données, un élément de réseau (MSC, SGSN) du réseau de télécommunications reçoit le message de sélection (8, 37a, 67) du terminal de communication (KEG1), le message de sélection contenant un identificateur du compte de facturation (K1) à utiliser pour la facturation de la transmission de données, et
- on facture ensuite la transmission de données par l'intermédiaire de ce compte de facturation (K1),
**caractérisé par le fait que**
- après le début de la transmission de données, l'élément de réseau (MSC, SGSN) du réseau de télécommunications (TKN) envoie un message de demande de sélection (7, 37, 66) au terminal de communication (KEG1), et
- l'élément de réseau du réseau de télécommunications reçoit le message de sélection (8, 37a, 67) envoyé alors par le terminal de communication (KEG1).

2. Procédé selon la revendication 1,
**caractérisé par le fait que**,
- en cas de non-réception du message de sélection (8, 37a, 67), on facture la transmission de données par l'intermédiaire d'un compte de facturation prédéterminé (K3).

3. Procédé selon la revendication 1 ou 2,
**caractérisé par le fait que**
- l'on envoie le message de demande de sélection (7, 37, 66) au terminal de communication (KEG1) avant la fin de la transmission de données.

4. Procédé selon l'une des revendications 1 à 3,
**caractérisé par le fait que**
- un noeud de commutation (MSC, SGSN) du réseau de télécommunications détecte le début de la transmission de données (1, 31, 61),
- le noeud de commutation informe (3, 33, 63) un point de commande de service (SCP) du réseau de télécommunications du début de la transmission de données,
- puis le point de commande de service (SCP) provoque (5, 35, 65) l'émission du message de demande de sélection (7, 37, 66) vers le terminal de communication (KEG1).

5. Procédé selon la revendication 1 ou 2,
**caractérisé par le fait que**
- l'on émet le message de demande de sélection (7, 37, 66) vers le terminal de communication (KEG1) après la fin de la transmission de données.

6. Procédé selon l'une des revendications 1 à 3 ou 5,
**caractérisé par le fait que**
- un noeud de commutation (MSC, SGSN) du réseau de télécommunications détecte la fin de la transmission de données (1, 31, 61),
- le noeud de commutation informe (3, 33, 63) un point de commande de service (SCP) du réseau de télécommunications de la fin de la transmission de données,
- puis le point de commande de service (SCP) provoque (5, 35, 65) l'émission du message de demande de sélection (7, 37, 66) vers le terminal de communication (KEG1).

7. Procédé selon l'une des revendications 4 à 6,
**caractérisé par le fait que**,
- pour provoquer l'émission du message de demande de sélection (7), on envoie un message de demande d'émission (6) au centre de commutation (MSC) du réseau de télécommunications (TKN).

8. Procédé selon l'une des revendications 1 à 7,
**caractérisé par le fait que**
- on émet le message de demande de sélection sous la forme d'un message USSD (7),
- puis on reçoit le message de sélection sous la forme d'un deuxième message USSD (8).

9. Procédé selon l'une des revendications 4 à 6,
**caractérisé par le fait que**,
- pour provoquer l'émission du message de demande de sélection (37), on envoie un message de demande d'émission (36) à une unité de sortie vocale (IP) du réseau de télécommunications (TKN).

10. Procédé selon l'une des revendications 1 à 6 ou 9,
**caractérisé par le fait que**
- on envoie le message de demande de sélection sous la forme d'un message vocal (37),
- puis on reçoit le message de sélection (37a).

11. Procédé selon l'une des revendications 4 à 6,
**caractérisé par le fait que**,
- pour provoquer l'émission du message de demande de sélection (66), on envoie un message de demande d'émission (65) à un centre de service de messages courts (SMSC) du réseau de télécommunications (TKN).

12. Procédé selon l'une des revendications 1 à 6 ou 11,
**caractérisé par le fait que**
- on envoie le message de demande de sélection sous la forme d'un message court écrit (66),
- puis on reçoit le message de sélection sous la forme d'un deuxième message court écrit (67).
